# FASCICULE DE BREVET EUROPEEN

(11) **EP 1 743 207 B1**
(45) Date de publication et mention de la délivrance du brevet: **24.04.2013**
(21) Numéro de dépôt: 05751609.8
(22) Date de dépôt: 05.04.2005
(51) Int. Cl.: G02C 5/22

(54) **ELEMENT DE CHARNIERE ELASTIQUE COMPACT POUR MONTURE DE LUNETTES**
KOMPAKTES ELASTISCHES SCHARNIER FÜR BRILLENFASSUNGEN
COMPACT ELASTIC HINGE ELEMENT FOR A SPECTACLE FRAME

(30) Priorité: 06.05.2004 FR 0404911; 27.05.2004 FR 0405711
(43) Date de publication de la demande: 17.01.2007
(73) Titulaire: Mazzucchelli International B.V., 1097 JB Amsterdam (NL)
(72) Inventeur: GENELOT, Nicolas, F-68220 Folgensbourg (FR)
(74) Mandataire: Faggioni, Carlo Maria
(86) Numéro de dépôt international: PCT/FR2005/000820
(87) Numéro de publication internationale: WO 2005/121873

(56) Documents cités:
- FR-A- 2 739 197
- FR-A- 2 793 323
- FR-A3- 2 694 643
- US-A- 4 991 258
- US-A1- 2003 172 492

## Description

La présente invention concerne le domaine de la lunetterie et les charnières pour monture de lunettes, et concerne plus particulièrement un perfectionnement d'un élément de charnière élastique pour monture de lunettes du type décrit par la demande WO 00/68730.

Le document FR 2 694 643 divulgue un élément de charnière élastique pour monture de lunettes, comprenant: un boîtier comprenant un logement longitudinal comportant une zone de guidage et une cavité comportant une paroi de retenue; une coulisse agencée dans le logement selon un axe de translation longitudinal, comprenant une partie saillante s'étendant à l'extérieur du logement, un partie guidée coopérant avec la zone de guidage, une partie centrale et une tige; un ressort de rappel de la coulisse dans une position de repos, une pièce de compression du ressort, solidaire de la tige, formant butée arrière du ressort, et une douille formant butée avant du ressort, comportant un corps monté autour de la partie centrale de la coulisse et une patte élastique orientée vers l'avant du logement selon un angle déterminé, dont l'extrémité s'appuie sur la paroi de retenue, et dans lequel la cavité comportant la paroi de retenue est située dans la zone de guidage du boîtier et *débouche* dans *celle-ci, et la partie guidée de la coulisse comprend deux premières faces* de guidage et deux secondes faces de guidage, l'une des secondes faces de guidage comportant un évidement dans lequel s'étend une partie de la patte élastique lorsque la coulisse est en position de repos.

La présente invention concerne ainsi un élément de charnière élastique pour monture de lunettes, comprenant un boîtier comprenant un logement longitudinal comportant une zone de guidage et au moins une cavité comportant une paroi de retenue, une coulisse agencée dans le logement selon un axe de translation longitudinal, comprenant une partie saillante s'étendant à l'extérieur du logement, une partie guidée coopérant avec la zone de guidage, une partie centrale et une tige, un ressort de rappel de la coulisse dans une position de repos, une pièce de compression du ressort, solidaire de la tige et formant butée arrière du ressort, et une douille formant butée avant du ressort, comportant un corps monté autour de la partie centrale de la coulisse et au moins une patte élastique orientée vers l'avant du logement selon un angle déterminé, dont l'extrémité s'appuie sur la paroi de retenue.

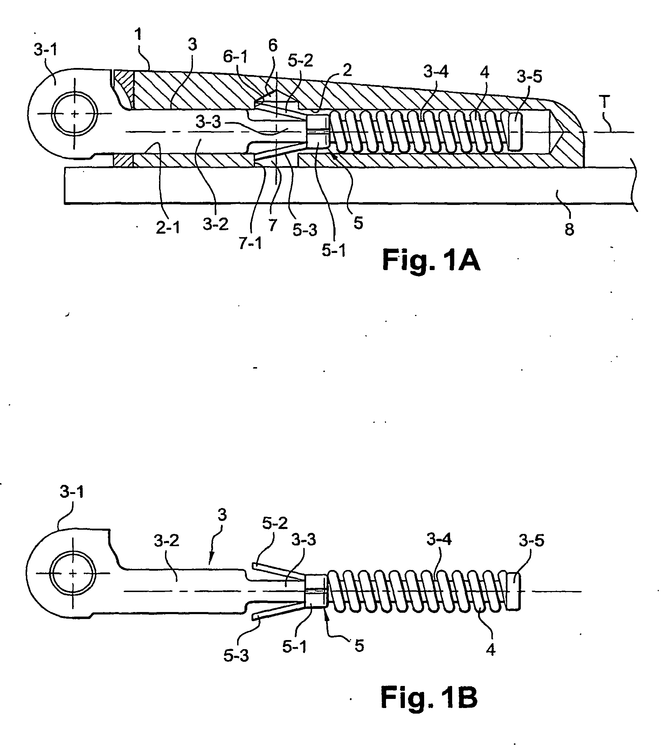

A titre de rappel, un tel élément de charnière classique est représenté sur la figure 1A. L'élément de charnière comprend un boîtier 1 dans lequel est pratiqué un logement 2, et une coulisse 3 agencée dans le logement 2. Le logement 2 comprend une zone 2-1 de guidage de la coulisse 3 selon un axe de translation longitudinal T et débouche à l'avant de l'élément de charnière pour former un orifice avant. La coulisse 3, représentée également en figure 1B, comprend une extrémité 3-1 formant un charnon d'articulation, s'étendant à l'extérieur du logement 2, une partie guidée 3-2 coopérant avec la zone de guidage 2-1, une partie centrale 3-3 et une tige 3-4. Un ressort 4 est monté autour de la tige 3-4, entre une douille 5 et une pièce de compression 3-5 qui est solidaire de l'extrémité de la tige 3-4. La douille 5 comprend un corps 5-1 monté coulissant autour de la tige 3-4 et deux pattes élastiques 5-2, 5-3 orientées vers l'avant selon un angle déterminé relativement à l'axe de translation. Dans la position de repos illustrée sur la figure 1A, l'extrémité de chaque patte élastique 5-2, 5-3 pénètre dans une cavité 6, 7 pour venir s'appuyer sur une paroi de retenue 6-1, 7-1 sensiblement perpendiculaire à l'axe de translation. De ce fait, lorsque la coulisse est tirée vers l'avant, la douille 5 est bloquée en translation et le ressort se trouve comprimé entre la pièce de compression mobile 3-5 et le corps fixe 5-1 de la douille 5.

Un tel élément de charnière présente une longueur de quelques millimètres seulement et est couramment utilisé dans l'industrie de la lunetterie. Il est généralement fixé par soudage ou collage sur une branche 8 de monture de lunettes représentée schématiquement en figure 1A. Le charnon 3-1 est généralement relié à un élément de charnière solidaire de la monture, tel qu'un tenon, pour obtenir une charnière de branche.

Malgré les faibles dimensions de cet élément de charnière, il est souhaité de diminuer sa longueur afin de réaliser des charnières ultra-compactes qui soient encore plus discrètes au plan esthétique.

La réduction de la longueur de l'élément de charnière implique une réduction de la longueur de la coulisse. Cette longueur est fonction des longueurs des quatre parties utiles de la coulisse, soit la partie formant charnon 3-1, la partie guidée 3-2, la partie centrale 3-3, et la tige 3-4 qui porte le ressort et le corps 5-1 de la douille.

Or, une diminution de la longueur de la partie guidée 3-2 au-delà d'une longueur minimale déterminée fragiliserait de façon excessive l'élément de charnière, car cette partie doit résister valablement à des forces et contraintes s'exerçant dans des directions perpendiculaires à l'axe de translation. Pour assurer une bonne résistance aux sollicitations hors axe tout en réduisant la longueur de la partie guidée, un guidage en deux points pourrait être envisagé, en ajoutant un élément de guidage à l'extrémité arrière de la coulisse, par exemple en utilisant la pièce de compression comme élément de guidage complémentaire. Toutefois, utiliser l'extrémité arrière de la coulisse fragiliserait l'axe de la coulisse car celui-ci serait soumis à une flexion. De plus, la pièce de compression est généralement un élément peu coûteux de fabrication rudimentaire, obtenu par exemple en frappant l'extrémité de la tige 3-4 de manière à faire apparaître une boursouflure qui bloque le ressort en translation. La prévision d'un élément de guidage à l'arrière de la coulisse n'est donc pas souhaitable.

D'autre part, la longueur de la partie centrale 3-3 de la coulisse est imposée par la longueur de la douille 5, qui est approximativement égale à la somme de la longueur du corps 5-1 de la douille et celle des pattes élastiques 5-2, 5-3. La partie centrale 3-3 permet en effet l'escamotage des pattes élastiques lorsque la coulisse équipée de la douille et du ressort est introduite dans le logement en passant par l'orifice avant. Or, la longueur des pattes de la douille est également assujettie à certaines contraintes technologiques, et ne peut être réduite inconsidérément.

Enfin, la longueur de la tige 3-4 ne peut elle-même être réduite en dessous d'une longueur minimale de ressort, correspondant à une force de rappel minimale visée, à laquelle s'ajoute la longueur du corps de la douille.

Ainsi, la présente invention vise à réduire la longueur de la coulisse d'un élément de charnière du type susdécrit sans réduire la longueur ou l'étendue des éléments essentiels de la charnière, à savoir la longueur de la partie guidée, la longueur de la douille, et la longueur du ressort.

Selon l'invention, cet objectif est atteint par la prévision d'un élément de charnière élastique pour monture de lunettes selon la revendication 1.

D'autres modes de réalisation sont décrits dans les revendications dépendantes.

Ces objets, caractéristiques et avantages ainsi que d'autres de la présente invention seront exposés plus en détail dans la description suivante d'une charnière élastique selon l'invention, faite à titre non limitatif en relation avec les figures jointes parmi lesquelles :
- la figure 1A précédemment décrite est une vue en coupe d'un élément de charnière élastique classique,
- la figure 1B précédemment décrite est une vue latérale d'une coulisse présente dans l'élément de charnière de la figure 1A,
- la figure 2 est une vue en perspective et coupe partielle d'un élément de charnière selon l'invention,
- la figure 3 est une vue en coupe d'un boîtier de l'élément de charnière de la figure 2,
- la figure 4 est une vue en perspective d'une coulisse présente dans l'élément de charnière de la figure 2,
- la figure 5 est une vue en perspective d'une douille présente dans l'élément de charnière de la figure 2, et
- la figure 6 est une vue en perspective d'une variante de réalisation d'une coulisse selon l'invention.

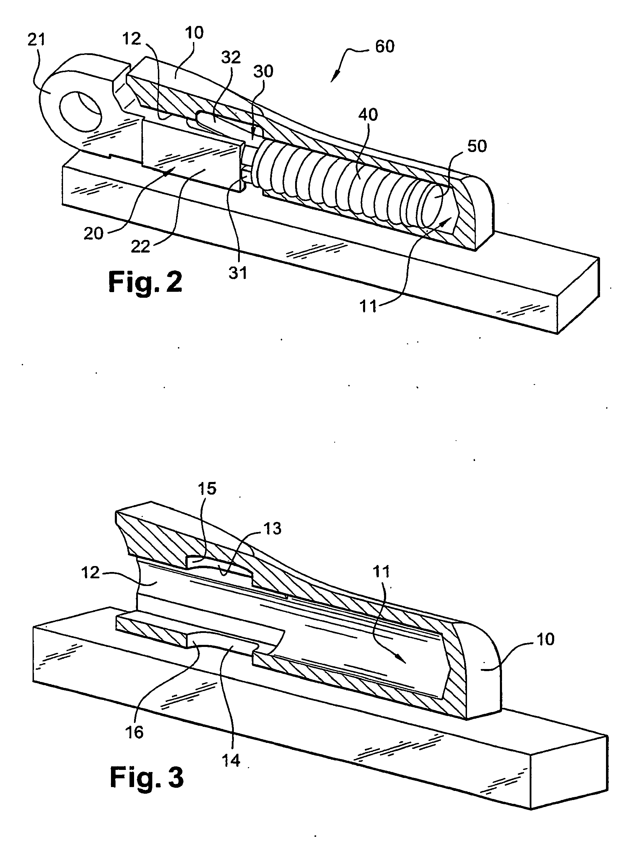

La figure 2 est une vue d'ensemble d'un élément 60 de charnière élastique selon l'invention, représenté en position de repos. L'élément 60 comprend classiquement un boîtier 10, représenté en coupe, une coulisse 20, une douille 30, un ressort à spires 40, et une pièce 50 de compression du ressort, formant une butée arrière du ressort.

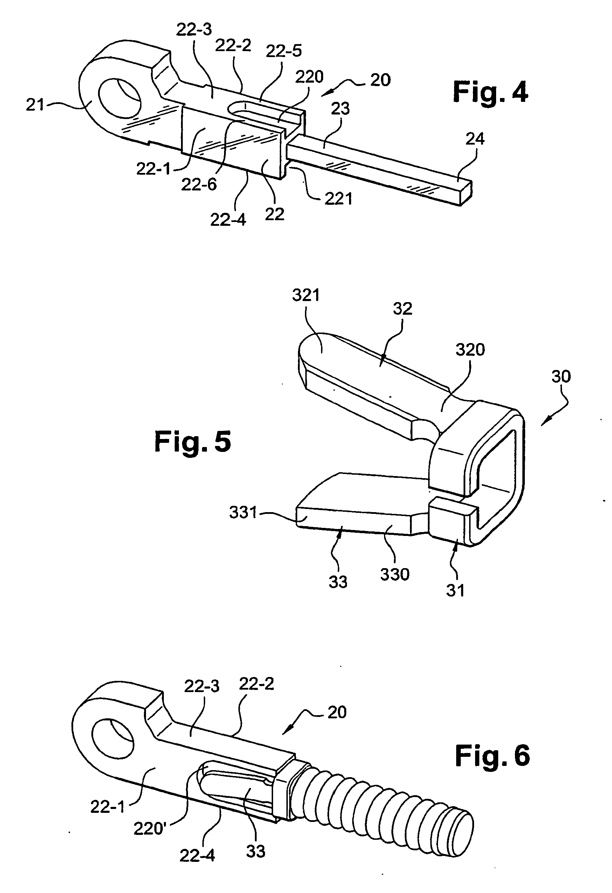

Le boîtier 10 est représenté plus en détail en figure 3, la coulisse 20 est représentée plus en détail en figure 4, et la douille est représentée plus en détail en figure 5. Certaines références sur les figures 3 à 5 ne sont pas reproduites sur la figure 2, pour des raisons de lisibilité de cette figure.

Le boîtier 10 comprend un logement longitudinal 11 recevant la coulisse 20 qui débouche à l'avant de l'élément de charnière pour former un orifice avant. La forme du logement est conçue pour pouvoir introduire dans le logement 11, en passant par l'orifice avant, l'ensemble formé par la coulisse, la douille, le ressort et la pièce de compression.

La coulisse 20 comprend une partie 21 en saillie formant un charnon, qui s'étend depuis l'orifice avant jusqu'à l'extérieur du logement 11, une partie guidée 22, ainsi qu'une partie centrale 23 et une tige arrière 24, la partie centrale 23 et la tige 24 étant de plus faible section que la partie guidée 22. Ici, la partie centrale 23 et la tige 24 sont formées par une seule et même tige, de section rectangulaire, ronde ou polygonale, autour de laquelle sont enfilés la douille 30 et le ressort 40. La partie en saillie 21 comporte un perçage destiné à recevoir un axe de liaison avec un tenon (non représenté). A noter que la pièce de compression, bien que représentée sur la figure comme un élément distinct de la tige, peut être classiquement formée par une boursouflure de l'extrémité de la tige. Cette pièce est dans ce cas une partie de la tige elle-même.

Le logement 11 comporte une zone de guidage 12 présentant des parois de guidage coopérant avec la partie guidée 22 de la coulisse, et des cavités 13, 14 comportant deux parois de retenue 15, 16 sensiblement perpendiculaires à l'axe de translation et orientées vers l'arrière du logement 11. Les parois de guidage ne couvrent pas nécessairement toute la zone de guidage 12, comme représenté par exemple en figure 3 où il apparaît que la zone de guidage est obtenue par perçage d'un orifice cylindrique puis usinage de parois de guindage planes dans l'orifice cylindrique formant des sortes de rails.

Par ailleurs, les cavités 13, 14 sont par exemple obtenues par perçage transversal du boîtier 10, de sorte que la cavité correspondant à l'introduction de l'outil de perçage, ici la cavité 14, débouche à l'extérieur du boîtier.

La douille 30 comprend classiquement un corps 31, qui est enfilé autour de la partie centrale 23 de la coulisse, et deux pattes élastiques 32, 33 orientées vers l'avant formant un angle "A" relativement à l'axe de translation de la coulisse. Chaque patte élastique comprend une partie proximale 320, 330 reliée au corps 31, et une partie distale 321, 331.

Lorsque la coulisse 20, après avoir été équipée de la douille 30, du ressort 40 et de la pièce de compression 50, est introduite dans le logement 11 en passant par l'orifice avant, les pattes élastiques 32, 33 se replient en direction de la coulisse lorsque celle-ci traverse la zone de guidage 12. Une fois l'opération effectuée, les pattes élastiques se relâchent et leurs extrémités viennent se loger dans les cavités 13, 14.

Selon l'invention, les cavités 13, 14 sont pratiquées dans la zone de guidage 12 elle-même, et débouchent dans la zone de guidage 12 au lieu de déboucher dans une région du logement 11 correspondant à la partie centrale 23 de la coulisse, comme cela est le cas dans l'art antérieur (Cf. fig.1A). Selon l'invention toujours, la partie guidée 22 de la coulisse présente deux évidements 220, 221 prévus pour recevoir chacun la partie proximale 320, 330 de l'une des pattes élastiques 32, 33. Ainsi, le corps 31 de la douille est poussé par le ressort 40 contre la partie guidée 22 de la coulisse, le ressort étant de préférence sensiblement comprimé ou en limite de compression lorsque la coulisse est en position de repos.

Lors de l'insertion de la coulisse 20 dans le logement 11, et plus particulièrement lorsque la douille traverse la zone de guidage 12, les pattes élastiques 32, 33 de la douille s'escamotent dans les évidements 220, 221. Lorsque la position de repos représentée en figure 2 est atteinte, elles s'étendent dans la zone de guidage 12 et non dans la région du logement 11 correspondant à la partie centrale 23 de la coulisse, comme cela est le cas dans l'art antérieur. Plus particulièrement, les parties proximales 320, 330 des pattes élastiques s'étendent dans les évidements 220, 221, les parties distales 321, 331 des pattes élastiques s'étendent dans les cavités 13, 14, et les extrémités des pattes élastiques se trouvent en regard des parois de retenue 15, 16.

Lorsque la coulisse est tirée vers l'avant le ressort 40, en se comprimant, pousse les pattes élastiques contre les parois de retenue 15, 16. Celles-ci bloquent ainsi la douille 30 en translation, le ressort 40 étant alors comprimé entre la pièce de compression 50 et la douille 30, et assurant le rappel de la coulisse en position de repos.

Dans la structure d'élément de charnière qui vient d'être décrite, l'étendue longitudinale des pattes élastiques 32, 33, qui est mathématiquement égale à la longueur des pattes multipliée par le cosinus de l'angle "A", n'intervient pas dans la détermination de la longueur de la partie centrale 23 de la coulisse et par conséquent dans la détermination de la longueur totale de la coulisse. La longueur de la partie centrale 23 de la coulisse est uniquement fonction de la longueur du corps 31 de la douille. Celui-ci, tel que représenté en figure 5, est ici une sorte de bague de section carrée formée par exemple par pliage d'une bande métallique découpée en forme de π présentant deux pattes perpendiculaires qui forment les pattes élastiques.

Par ailleurs, comme cela apparaît en figure 4, la partie guidée 22 de la coulisse présente des faces latérales gauche 22-1 et droite 22-2 qui assurent le guidage latéral gauche et droite, ainsi que des faces latérales supérieure 22-3 et inférieure 22-4 qui assurent le guidage latéral supérieur et inférieur. Les évidements 220, 221 sont pratiqués ici sur les faces 22-3, 22-4 et s'étendent ici sur la demi-longueur environ de la partie guidée 22.

Selon l'invention, les pattes élastiques 32, 33 et les évidements 220, 221 sont ici d'une largeur inférieure à la largeur des faces 22-3, 22-4 et il subsiste avantageusement, au bord des évidements 220, 221, des bandes étroites (fig. 4, face 22-3, bandes 22-5, 22-6) formant des sortes de rails ou patins qui assurent également le guidage latéral supérieur et latéral inférieur de la coulisse, la partie arrière de la partie guidée 22 ayant ainsi une section sensiblement en forme de H.

Ainsi, la partie guidée 22 présente une partie avant qui est dépourvue d'évidement et qui assure le maintien de la coulisse dans quatre directions complémentaires perpendiculaires à l'axe de translation, et une partie arrière portant les évidements 220, 221, qui assure également et avantageusement le maintien de la coulisse dans les quatre directions.

Diverses variantes de la présente invention peuvent être prévues par l'homme de l'art. Dans une variante de réalisation représentée en figure 6, les évidements 220' sont pratiqués dans les faces latérales gauche 22-1 et droite 22-2 de la partie guidée de la coulisse, dont la largeur, correspondant à la hauteur de la coulisse, est supérieure à la largeur des faces supérieure et inférieure de la partie guidée.

Dans d'autres variantes de réalisation, la partie guidée de la coulisse peut être de section polygonale. Les évidements recevant les parties proximales des pattes élastiques peuvent être de formes diverses, par exemple présenter un fond incliné correspondant à un angle d'escamotage des pattes élastiques lors de l'assemblage de l'élément de charnière. Ils peuvent également être traversants et se rejoindre, la partie arrière de la partie guidée de la coulisse ayant dans ce cas la forme d'une "H" sans la barre centrale du H. Par ailleurs, la douille peut comprendre trois, voire quatre pattes élastiques, un nombre correspondant d'évidements étant alors prévu dans la partie guidée de la coulisse. La douille peut également ne comprendre qu'une patte élastique, bien qu'une structure de douille symétrique soit mieux adaptée à une bonne répartition des forces de retenue du ressort. D'autre part, bien qu'il soit avantageux que les parties proximales des pattes élastiques s'étendent entièrement dans les évidements, afin que le corps de la douille soit en contact avec la partie guidée de la coulisse et que la longueur de la partie centrale de la coulisse soit minimale, il entre dans le cadre de la présente invention de prévoir un mode de réalisation intermédiaire entre l'art antérieur et le mode de réalisation qui vient d'être décrit. Dans ce mode de réalisation, la section de la partie centrale 23 de la coulisse présente un élargissement assurant le blocage du corps de la douille en translation avant que celui-ci ne bute contre la partie guidée (cf. par: exemple fig. 1B). Les pattes élastiques comprennent ainsi une partie proximale qui s'étend le long de la partie centrale de la coulisse, une partie centrale qui s'étend dans les évidements selon l'invention, et une partie distale qui s'étend dans les cavités comportant les parois de retenue. Ainsi, quel que soit le mode de réalisation de l'invention, les cavités 13, 14 comportant les parois de retenue sont agencées dans la zone de guidage 12 et les extrémités des pattes élastiques 32, 33 s'étendent jusqu'à la zone de guidage grâce aux évidements selon l'invention. L'invention permet ainsi de rapprocher autant que souhaité le corps de la douille de la partie guidée de la coulisse et de diminuer de façon correspondante la longueur totale de l'élément de charnière, tout en respectant les longueurs minimales du ressort et de la partie de guidage qui sont imposées par les contraintes technologiques et les exigences de solidité de l'élément de charnière.

Enfin, bien que l'on ait indiqué ci-dessus que les évidements selon l'invention sont conformés pour permettre un escamotage total des pattes élastiques lors de l'introduction de la coulisse dans le logement du boîtier, cette caractéristique ne s'impose que si la coulisse est introduite dans le boîtier de cette manière.

Un élément de charnière selon l'invention est susceptible de divers agencements. Bien que généralement fixé sur des branches de montures de lunettes, un tel élément de charnière peut également être monté sur le cadre de la monture, ou sur une partie fixe de branche solidaire du cadre de monture.

## Revendications

1. Élément (60) de charnière élastique pour monture de lunettes, comprenant:
- un boîtier (10) comprenant un logement longitudinal (11) comportant une zone de guidage (12) et au moins une cavité (13,14) comportant une paroi de retenue (15,16),
- une coulisse (20) agencée dans le logement (11) selon un axe de translation longitudinal, comprenant une partie saillante (21) s'étendant à l'extérieur du logement, une partie guidée (22) coopérant avec la zone de guidage (12), une partie centrale (23) et une tige (24),
- un ressort (40) de rappel de la coulisse dans une position de repos,
- une pièce (50) de compression du ressort (40), solidaire de la tige (24), formant butée arrière du ressort, et
- une douille (30) formant butée avant du ressort, comportant un corps (31) monté autour de la partie centrale (23) de la coulisse et au moins une patte élastique (32,33) orientée vers l'avant du logement selon un angle (A) déterminé, dont l'extrémité s'appuie sur la paroi de retenue (15,16), dans lequel
la dite cavité (13,14) comportant la paroi de retenué (15,16) est située dans la zone de guidage (12) du boîtier et débouche dans celle-ci, et en ce que la partie guidée (22) de la coulisse comprend au moins une face de guidage (22-3, 22-4) qui comporte un évidement (220,221) dans lequel s'étend une partie (320,330) de la patte élastique (32,33) lorsque la coulisse est en position de repos, **caractérisé en ce que** le dit évidement est d'une largeur inférieure à la largeur de la dite face de guidage (22-3, 22-4) et il subsiste au bord de l'évidement (220, 221) des bandes étroites (22-5, 22-6) formant des sortes de rails ou patins, et
la zone de guidage (12) du boîtier est obtenue par usinage de parois de guidage planes formant des sortes de rails.

2. Élément de charnière élastique selon la revendication 1, dans lequel l'évidement (220, 221) est d'une étendue suffisante pour assurer l'escamotage total de la patte élastique (32, 33) lorsque la douille est introduite dans le logement (11) en passant par la zone de guidage (12).

3. Élément de charnière élastique selon l'un des revendications 1 et 2, dans lequel la partie proximale (320, 330) de la patte élastique (32, 33) s'étend entièrement dans la zone de guidage (12) et le corps (31) de la douille (30) est en butée contre la partie guidée (22) de la coulisse.

4. Élément de charnière élastique selon la revendication 3, dans lequel la cavité (14) comprenant la paroi de retenue (16) débouche à l'extérieur du boîtier.

5. Élément de charnière élastique selon l'une des revendications 1 à 4, dans lequel la douille présente deux pattes élastiques (32, 33), la partie guidée (22) de la coulisse présente deux premières faces de guidage (22-1, 22-2) et deux secondes faces de guidage (22-3, 22-4) comportant deux évidements (220, 221) recevant les pattes élastiques (32, 33) et des bandes étroites (22-5, 22-6) en bordure des évidements (220, 221).

6. Élément de charnière élastique selon l'une des revendications 1 à 5, dans lequel la partie guidée (22) de la coulisse présente dans sa région comportant l'évidement une section sensiblement en forme de "H" avec la barre centrale du "H".

7. Élément de charnière élastique selon l'une des revendications 1 à 5, dans lequel la partie guidée (22) de la coulisse présente dans sa région comportant l'évidement une section sensiblement en forme de "H" sans la barre centrale du "H".

8. Élément de charnière élastique selon l'une des revendications 5 à 7, dans lequel les évidements sont pratiqués dans les deux faces de plus faible largeur de la partie guidée de la coulisse.

9. Élément de charnière élastique selon l'une des revendications 5 à 7, dans lequel les évidements sont pratiqués dans les deux faces de plus forte largeur de la partie guidée de la coulisse.

10. Élément de charnière élastique selon l'une des revendications 1 à 9, dans lequel la partie centrale (23) de la coulisse (20) est un prolongement d'une tige (24) portant le ressort (40).

11. Monture de lunettes, comprenant un élément de charnière élastique selon l'une des revendications 1 à 10.

12. Branche de monture de lunettes, comprenant un élément de charnière élastique selon l'une des revendications 1 à 10.

## Claims

1. Elastic hinge element (60) for a spectacle frame comprising:
• a housing (10) comprising a longitudinal chamber (11) having a guide zone (12) and at least one cavity (13, 14) having a retaining wall (15, 16),
• a slide (20) arranged in the chamber (11) in a longitudinal translation axis comprising a projecting part (21) extending outside the chamber, a guided part (22) cooperating with the guide zone (12), a central part (23) and a rod (24),
• a spring (40) for returning the slide to a resting position,
• a compression part (50) of the spring (40) integral to the rod (24) forming a rear abutment of the spring, and
• a bush (30) forming a front abutment of the spring having a body (31) mounted around the central part (23) of the slide and at least one elastic tab (32, 33) oriented towards the front of the chamber at a determined angle (A), the end of which rests against the retaining wall (15, 16),
in which
said cavity (13, 14) having the retaining wall (15, 16) is located in the guide zone (12) of the housing and opens into this, and that the guided part (22) of the slide comprises at least one guide face (22-3, 22-4), which has a recess (220, 221) in which a portion (320, 330) of the elastic tab (32, 33) extends when the slide is in resting position, **characterised in that** the said recess has a smaller width than the width of the said guide face (22-3, 22-4) and at the edge of the recess (220, 221) there remain narrow bands (22-5, 22-6), which form rail- or runner-like structures, and
the guide zone (12) of the housing is formed by machining plane guide walls forming rail-like structures.

2. Elastic hinge element according to claim 1, in which the recess (220, 221) has an adequate extent to ensure complete retraction of the elastic tab (32, 33) when the bush is inserted into the chamber (11) passing through the guide zone (12).

3. Elastic hinge element according to one of claims 1 and 2, in which the proximal part (320, 330) of the elastic tab (32, 33) extends entirely into the guide zone (12) and the body (31) of the bush (30) abuts against the guided part (22) of the slide.

4. Elastic hinge element according to claim 3, in which the cavity (14) comprising the retaining wall (16) opens to the outside of the housing.

5. Elastic hinge element according to one of claims 1 to 4, in which the bush has two elastic tabs (32, 33), the guided part (22) of the slide has two first guide faces (22-1, 22-2) and two second guide faces (22-3, 22-4) having two recesses (220, 221) that receive the elastic tabs (32, 33) and narrow bands (22-5, 22-6) bordering the recesses (220,221).

6. Elastic hinge element according to one of claims 1 to 5, in which in its region comprising the recess the guided part (22) of the slide has a substantially H-shaped cross-section with the central bar of the "H".

7. Elastic hinge element according to one of claims 1 to 5, in which in its region comprising the recess the guided part (22) of the slide has a substantially H-shaped cross-section without the central bar of the "H".

8. Elastic hinge element according to one of claims 5 to 7, in which the recesses are formed in the two faces with the smallest width of the guided part of the slide.

9. Elastic hinge element according to one of claims 5 to 7, in which the recesses are formed in the two faces with the largest width of the guided part of the slide.

10. Elastic hinge element according to one of claims 1 to 9, in which the central part (23) of the slide (20) is an extension of a rod (24) bearing the spring (40).

11. Spectacle frame comprising an elastic hinge element according to one of claims 1 to 10.

12. Side of a spectacle frame comprising an elastic hinge element according to one of claims 1 to 10.

## Patentansprüche

1. Elastisches Scharnierelement (60) für ein Brillengestell, umfassend
- ein Gehäuse (10) mit einem longitudinalen Aufnahmeraum (11), umfassend eine Führungszone (12) und zumindest eine Vertiefung (13, 14) aufweist, die eine Haltewand (15, 16) aufweist,
- einen Schieber (20), der in dem Aufnahmeraum (11) entlang einer longitudinalen Translationsachse angeordnet ist, mit einem vorspringenden Abschnitt (21), der sich zum Äußeren des Aufnahmeraums erstreckt, einen geführten Abschnitt (22), der mit der Führungszone (12) zusammenwirkt, einen zentralen Abschnitt (23) und einen Schaft (24),
- eine Feder (40) zur Rückstellung des Schiebers in eine Ruhestellung,
- ein Teil (50) zum Zusammendrücken der Feder (40), das fest mit dem Schaft (24) verbunden ist und einen hinteren Anschlag der Feder bildet, und
- eine Hülse (30), die einen vorderen Anschlag der Feder bildet, mit einem Grundkörper (31), der um den zentralen Abschnitt (23) des Schiebers angebracht ist, und zumindest einer elastischen Lasche (32, 33), die in Richtung auf den vorderen Teil des Aufnahmeraums unter einem vorbestimmten Winkel (A) gerichtet ist, deren Ende sich auf der Haltewand (15, 16) abstützt, wobei
- die genannte Vertiefung (13, 14), die die Haltewand (15, 16) aufweist, in der Führungszone (12) des Gehäuses angeordnet ist und in diese mündet, wobei der geführte Abschnitt (22) des Schiebers zumindest eine Führungsfläche (22)-3, 22-4) umfasst, die eine Aussparung (220, 221) aufweist, in die sich ein Teil (320, 3330) der elastischen Lasche (32, 33) erstreckt, wenn sich der Schieber in Ruhestellung befindet, **dadurch gekennzeichnet, dass** die genannte Aussparung eine geringere Breite aufweist als die Breite der genannten Führungsfläche (22-3, 22-4), wobei am Rand der Aussparung (220, 221) schmale Streifen (22-5, 22-6) verbleiben, die eine Art Schienen oder Kufen bilden, und
- wobei die Führungszone (12) des Gehäuses durch maschinelle Bearbeitung von ebenen Führungswänden erhalten ist, die eine Art Schiene bilden.

2. Elastisches Scharnierelement nach Anspruch 1, **dadurch gekennzeichnet, dass** die Aussparung (220, 221) eine ausreichende Erstreckung aufweist, um die vollständige Aufnahme der elastischen Lasche (32, 33) zu gewährleisten, wenn die Hülse in den Aufnahmeraum (11) eingeführt ist und an der Führungszone (12) entlanggeht.

3. Elastisches Scharnierelement nach einem der Ansprüche 1 oder 2, **dadurch gekennzeichnet, dass** der proximale Abschnitt (220, 330) der elastischen Lasche (32, 33) sich vollständig in der Führungszone (12) erstreckt, wobei der Grundkörper (31) der Hülse (30) im Anschlag gegen den geführten Abschnitt (22) des Schiebers ist.

4. Elastisches Scharnierelement nach Anspruch 3, **dadurch gekennzeichnet, dass** die Vertiefung (14), die die Haltewand (16) umfasst, zum Äußeren des Gehäuses mündet.

5. Elastisches Scharnierelement nach einem der Ansprüche 1 bis 4, **dadurch gekennzeichnet, dass** die Hülse zwei elastische Laschen (32, 33) aufweist, wobei der geführte Abschnitt (22) des Schiebers zwei erste Führungsflächen (22-1, 22-2) und zwei zweite Führungsflächen (22-3, 22-4) aufweist, die zwei Vertiefungen (220, 221) umfassen, welche die elastischen Laschen (32, 33) und die schmalen Streifen (22-5, 22-6) am Rand der Aussparungen (220, 221) aufnehmen.

6. Elastisches Scharnierelement nach einem der Ansprüche 1 bis 5, **dadurch gekennzeichnet, dass** der geführte Abschnitt (22) des Schiebers in seinem Bereich, der die Aussparung umfasst, einen im Wesentlichen H-förmigen Querschnitt aufweist, mit dem mittleren Steg des "H".

7. Elastisches Scharnierelement nach einem der Ansprüche 1 bis 5, **dadurch gekennzeichnet, dass** der geführte Abschnitt (22) des Schiebers in seinem Bereich, der die Aussparung aufweist, einen im Wesentlichen H-förmigen Querschnitt aufweist, ohne den mittleren Steg des "H".

8. Elastisches Scharnierelement nach einem der Ansprüche 5 bis 7, **dadurch gekennzeichnet, dass** die Vertiefungen in den beiden Flächen der geringsten Breite des geführten Abschnitts des Schiebers eingearbeitet sind.

9. Elastisches Scharnierelement nach einem der Ansprüche 5 bis 7, **dadurch gekennzeichnet, dass** die Vertiefungen in den beiden Flächen der größten Breite des geführten Abschnitts des Schiebers eingearbeitet sind.

10. Elastisches Scharnierelement nach einem der Ansprüche 1 bis 9, **dadurch gekennzeichnet, dass** der zentrale Abschnitt (23) des Schiebers (20) eine Verlängerung eines Schafts (24) ist, der die Feder (40) trägt.

11. Brillengestell mit einem elastischen Scharnierelement nach einem der Ansprüche 1 bis 10.

12. Bügel eines Brillengestells, mit einem elastischen Scharnierelement nach einem der Ansprüche 1 bis 10.
